# EUROPÄISCHE PATENTSCHRIFT

(11) **EP 1 273 910 B1**
(45) Veröffentlichungstag und Bekanntmachung des Hinweises auf die Patenterteilung: **09.05.2007**
(21) Anmeldenummer: 02012230.5
(22) Anmeldetag: 04.06.2002
(51) Int. Cl.: G01N 27/406, G01N 27/407

(54) **Sensorelement mit leitfähiger Abschirmung**
Sensor element with conductive shielding
Elément d'un capteur avec blindage conducteur

(30) Priorität: 07.07.2001 DE 10133160
(43) Veröffentlichungstag der Anmeldung: 08.01.2003
(73) Patentinhaber: ROBERT BOSCH GMBH, 70442 Stuttgart (DE)
(72) Erfinder: Cramer, Berndt, 71229 Leonberg (DE); Springhorn, Carsten, Dr., 70197 Stuttgart (DE); Oehler, Gudrun, 70435 Stuttgart (DE); Schuele, Margret, 71263 Weil der Stadt (DE); Schuhmann, Bernd, Dr., 71277 Rutesheim (DE); Diehl, Lothar, Dr., 70499 Stuttgart (DE); Thiemann-Handler, Sabine, Dr., 70435 Stuttgart (DE)

(56) Entgegenhaltungen:
- EP-A- 0 281 378
- EP-A- 0 878 709
- DE-A- 19 803 532
- DE-A- 19 857 470
- US-A- 4 400 260

## Beschreibung

Die Erfindung betrifft ein Sensorelement auf Festelektrolytbasis insbesondere für einen Gassensor zur Bestimmung einer Gaskomponente in einem Gasgemisch gemäß Anspruch 1 und dessen Verwendung.

### Stand der Technik

Sensorelemente auf Festelektrolytbasis, die elektrochemisch die Bestimmung einer Gaskomponente in einem Gasgemisch ermöglichen, sind beispielsweise in der unveröffentlichten DE-Anmeldung mit dem Aktenzeichen 10058014.9 bereits beschrieben worden. Die Bestimmung beruht dabei auf einer amperometrischen Messung der Konzentration der entsprechenden Gaskomponente. Das Sensorelement enthält dazu mehrere elektrochemische Zellen mit jeweils zwei Elektroden, die über ein ionenleitendes Festelektrolytmaterial miteinander in Kontakt stehen. Beim Betrieb des Sensorelements kann es zur Beeinflussung der elektrochemischen Zellen untereinander kommen und somit unter ungünstigen Umständen zu einer Verfälschung der Meßergebnisse des Sensorelements.

Aus der DE 198 03 532 A1 ist ein Gassensor gemäß dem Oberbergriff des Anspruchs 1 bekannt.

Aus der DE 198 33 453 A1 ist ein Gassensor bekannt, dessen Funktionsweise auf der Bestimmung eines Meßstromes einer elektrochemischen Zelle beruht. Zusätzlich ist ein Heizelement vorgesehen, das den Sensor auf die gewünschte Betriebstemperatur bringt. Um zu verhindern, daß Leckströme des Heizelements einen störenden Einfluß auf die Meßempfindlichkeit des Gassensors haben, ist zwischen dem Heizelement und dem eigentlichen Sensorelement des Gassensors eine flächig ausgedehnte Schirmelektrode vorgesehen. Diese Schirmelektrode ist jedoch ungeeignet, eine gegenseitige Beeinflussung mehrerer elektrochemischer Zellen untereinander zu verhindern.

Aufgabe der vorliegenden Erfindung ist es, ein Sensorelement mit mindestens zwei elektrochemischen Zellen für einen Gassensor bereitzustellen, wobei eine gegenseitige Beeinflussung der im Sensorelement vorgesehenen elektrochemischen Zellen weitgehend verhindert wird.

### Vorteile der Erfindung

Das erfindungsgemäße Sensorelement mit den Merkmalen des Anspruchs 1 hat den Vorteil, daß im Bereich der Elektroden einer elektrochemischen Zelle des Sensorelements eine leitfähige Abschirmung vorgesehen ist, die die Elektroden der elektrochemischen Zelle gegenüber einem von einer zweiten elektrochemischen Zelle oder von dem sich zwischen den Elektroden der zweiten elektrochemischen Zelle bewegenden Ladungsträgern ausgehenden elektrischen Feld abschirmt. Die Abschirmung ermöglicht auf einfache Weise die zuverlässige Einhaltung eines konstanten Potentials an den Elektroden der ersten elektrochemischen Zelle. Dies erhöht die Meßgenauigkeit des Sensorelements, da das Meßsignal der ersten elektrochemischen Zelle auf diese Weise nur von der Konzentration der zu bestimmenden Gaskomponente abhängt und nicht von elektrischen Feldern weiterer elektrochemischer Zellen des Sensorelements.

Durch die in den Unteransprüchen aufgeführten Maßnahmen sind vorteilhafte Weiterbildungen und Verbesserungen des im Hauptanspruch angegebenen Sensorelements möglich. So ist es besonders vorteilhaft, wenn die Abschirmung elektronenleitend ausgeführt ist und auf das Potential einer der Elektroden des Sensorelements gelegt wird. Die Abschirmung hat dabei die Form eines an mindestens einer Seite offenen Hohlkörpers und umgibt die abzuschirmende Elektrode. Der Vorteil dieser Anordnung besteht darin, dass die Abschirmung einem Farraday'schen Käfig entspricht.

### Zeichnung

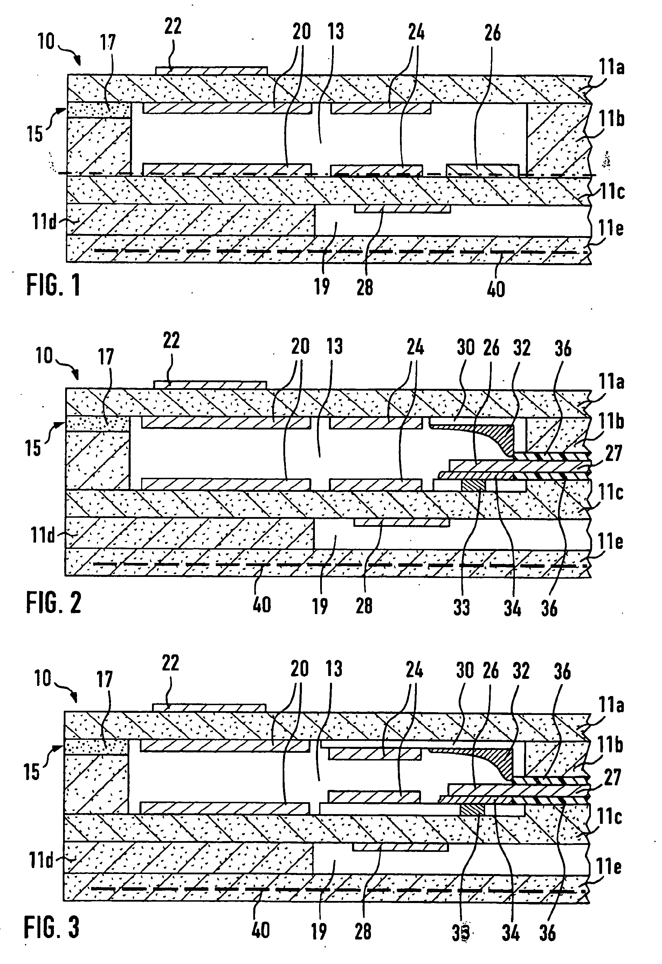

Drei Ausführungsbeispiele der Erfindung sind in der Zeichnung dargestellt und in der nachfolgenden Beschreibung näher erläutert. Es zeigt Figur 1 einen Längsschnitt durch ein bereits bekanntes Sensorelement, die Figuren 2 bis 4 zeigen Längsschnitte durch Sensorelemente gemäß dreier Ausführungsbeispiele.

### Ausführungsbeispiele

In Figur 1 ist ein prinzipieller Aufbau eines bereits bekannten Sensorelements dargestellt. Mit 10 ist ein planares Sensorelement eines elektrochemischen Gassensors bezeichnet, das beispielsweise der Bestimmung sauerstoffhaltiger Gase, insbesondere des Stickoxidgehaltes von Abgasen dient. Es weist eine Mehrzahl von sauerstoffionenleitenden Festelektrolytschichten 11a, 11b, 11c, 11d und 11e auf, die beispielsweise als keramische Folien ausgeführt sind und einen planaren keramischen Körper bilden. Sie bestehen aus einem sauerstoffionenleitenden Festelektrolytmaterial, wie beispielsweise mit Y₂O₃ stabilisiertem oder teilstabilisiertem ZrO₂.

Die integrierte Form des planaren keramischen Körpers des Sensorelements 10 wird durch Zusammenlaminieren der mit Funktionsschichten bedruckten keramischen Folien und anschließendem Sintern der laminierten Struktur in an sich bekannter Weise hergestellt.

Das Sensorelement umfaßt einen inneren Gasraum 13, der eine Gaseintrittsöffnung 15 aufweist, die den Kontakt mit dem zu bestimmenden Gasgemisch ermöglicht. Innerhalb der Gaseintrittsöffnung 15 befindet sich dem inneren Gasraums 13 vorgelagert eine poröse Diffusionsbarriere 17.

Im inneren Gasraum 13 ist eine erste und eine zweite innere Elektrode 20, 24 in einfacher oder doppelter Ausführung vorgesehen. An der äußeren, dem Meßgas unmittelbar zugewandten Seite der Festelektrolytschicht 11a befindet sich eine äußere Elektrode 22, die mit einer nicht dargestellten porösen Schutzschicht bedeckt sein kann.

Die inneren Elektroden 20, 24 bilden jeweils mit der äußeren Elektrode 22 zusammen elektrochemische Pumpzellen. Mittels der Pumpzellen wird der Sauerstoffpartialdruck im inneren Gasraum 13 des Sensorelements 10 reguliert. Zur Kontrolle des eingestellten Sauerstoffpartialdrucks sind die inneren Elektroden 20, 24 zusätzlich mit einer Referenzelektrode 28, die im Referenzgaskana: 19 angeordnet ist, zu sogenannten Nernst- bzw. Konzentrationszellen zusammengeschaltet. Diese ermöglichen einen direkten Vergleich des von der Sauerstoffkonzentration im inneren Gasraum 1 abhängigen Sauerstoffpotentials der inneren Elektroden 20, 24 mit dem konstanten Saúerstoffpotential der Referenzelektrode 28 in Form einer meßbaren elektrischen Spannung. Die Höhe der an den Pumpzellen anzulegenden Pumpspannungen wird so gewählt, daß sich an den entsprechenden Konzentrationszellen eine konstante Spannung einstellt. Dabei wird die anzulegende Pumpspannung so gewählt, daß sich an den inneren Elektroden 20 der ersten Pumpzelle ein im Vergleich zum Gasgemisch reduzierter Sauerstoffgehalt von beispielsweise 1000 ppm einstellt, der an den inneren Elektroden 24 der zweiten Pumpzelle weiter verringert wird.

Im inneren Gasraum 13 befindet sich auf dessen der Gaseintrittsöffnung 15 abgewandten Seite eine weitere innere Elektrode 26, die zusammen mit der Referenzelektrode 28 eine weitere Pump zelle bildet. Diese Pumpzelle dient dem Nachweis des zu bestimmenden Gases, wobei das zu bestimmende Gas an der Oberfläche de: inneren Elektrode 26 zersetzt und der freiwerdende Sauerstoff abgepumpt wird. Als Maß für die Konzentration des zu bestimmenden Gases wird der zwischen den Elektroden 26, 28 fließende Pumpstrom herangezogen.

Um zu gewährleisten, daß an den Elektroden 20, 24 keine Zersetzung des zu bestimmenden Gases auftritt, werden die Elektroden 20, 24 aus einem katalytisch inaktiven Material gefertigt. Dies kann beispielsweise Gold oder eine Gold/Platin-Legierung sein. Die Elektrode 26 ist dagegen katalytisch aktiv ausgeführt und besteht beispielsweise aus Rhodium oder einer Platin/Rhodium-Legierung. Die äußere Elektrode 22 sowie die Referenzelektrode 28 bestehen ebenfalls aus einem katalytisch aktiven Material wie beispielsweise Platin. Das Elektrodenmaterial für alle Elektroden wird dabei in an sich bekannter Weise als Cermet eingesetzt, um mit den keramischen Folien zu versintern.

In den keramischen Grundkörper des Sensorelements 10 ist ferner zwischen zwei hier nicht dargestellten elektrischen Isolationsschichten ein Widerstandsheizer 40 eingebettet. Der Widerstandsheizer 40 dient dem Aufheizen des Sensorelements 10 auf die notwendige Betriebstemperatur von beispielsweise 750°C.

Da der im inneren Gasraum 13 einzustellende Sauerstoffpartialdruck gegenüber dem im Gasgemisch vorliegenden vergleichsweise niedrig ist, kann die Zahl der von den inneren Pumpelektronen 20, 24 zur äußeren Pumpelektrode 22 zu transportierenden Sauerstoffionen je nach Sauerstoffgehalt des zu bestimmenden Gasgemischs sehr groß sein. Um einen ausreichenden Sauerstofftransport aus dem inneren Gasraum 13 zur äußeren Pumpelektrode 22 zu gewährleisten, wird eine entsprechend hohe Potentialdifferenz zwischen den inneren Pumpelektroden 20, 24 und der äußeren Pumpelektrode 22 eingestellt.

Die große Zahl an Sauerstoffionen, die von den inneren Pumpelektroden 20, 24 zur äußeren Pumpelektrode 22 transportiert wird, erfährt beim Tansport durch den Festelektrolyten einen Widerstand, der unter anderem von der Zahl der durch den Festelektrolyten transportierten Sauerstoffionen abhängt. Je höher die Zahl der transportierten Sauerstoffionen, desto höher ist auch der Widerstand. Als Folge des Widerstands wird im Festelektrolyten eine Potentialdifferenz aufgebaut, die gegenläufig zu der zwischen den Elektroden 20 bzw. 24 und 22 angelegten Potentialdifferenz ist. Diese gegenläufige Potentialdifferenz bildet ein eigenes elektrisches Feld aus, dessen Stärke vom Betrag der gegenläufigen Potentialdifferenz abhängt und in denjenigen Bereichen des Festelektrolyten besonders groß ist, durch die die Sauerstoffionen fließen.

Darüber hinaus gehen von den beiden elektrochemischen Pumpzellen 20, 22 bzw. 24, 22 sich zeitlich verändernde, von der Sauerstoffkonzentration des Gasgemischs abhängige elektrische Felder aus.

Die Bestimmung der zu messenden Gaskomponente erfolgt mittels einer aus den Elektroden 26, 28 gebildeten Pumpzelle, zwischen deren Elektroden 26, 28 eine konstante Potentialdifferenz eingestellt wird. Die Güte des resultierenden Meßsignals hängt wesentlich von einer möglichst konstanten Potentialdifferenz zwischen den Elektroden 26, 28 ab. Die von den Pumpzellen bzw. den transportierten Ladungsträgern ausgehenden elektrischen Felder führen jedoch an den Elektroden der dritten Pumpzelle zu einer sich überlagernden, zeitlich variierenden Potentialdifferenz.

In Figur 2 ist ein Querschnitt durch ein Sensorelement gemäß einem ersten Ausführungsbeispiel der vorliegenden Erfindung dargestellt. Die innere Elektrode 26 der signalbildenden dritten Pumpzelle 26, 28 ist von einer leitfähigen Abschirmung 30 umgeben. Die Abschirmung 30 besteht aus einem leitfähigen, vorzugsweise elektronenleitenden Material wie beispielsweise einem platinhaltigen Cermet. Die Abschirmung 30 ist als Hohlkörper ausgeführt, der zumindest an der dem inneren Gasraum 13 zugewandten Seite offen ist. Die Abschirmung 30 weist somit vorzugsweise die Form eines Bechers auf, es können jedoch auch eine oder mehrere Begrenzungsflächen des Bechers weggelassen werden. Die Abschirmung 30 umfaßt eine Durchbrechung, durch die eine mit isolierenden Schichten 36 versehene Zuleitung 27 zur Elektrode 26 geführt wird.

Als Material für die elektrisch isolierende Schicht 36 kann beispielsweise Aluminiumoxid gewählt werden. Die als Farraday 'scher Käfig wirkende Abschirmung 30 verhindert wirkungsvoll, daß ein von der Pumpzelle 20, 22, bzw. 24, 22 ausgehendes elektrisches Feld die konstante Potentialdifferenz zwischen den Elektroden 26, 28 beeinflußt. Dies gilt auch für das von den transportierten Sauerstoffionen ausgehende elektrische Feld.

Um zu verhindern, daß ein elektrischer Kurzschluß zwischen der Elektrode 26 und der Abschirmung 30 stattfindet, ist zwischen der Abschirmung 30 und der Auflagefläche der Elektrode 26 eine vorzugsweise aus Festelektrolytmaterial gefertigte Zwischenschicht 34 vorgesehen. Vorzugsweise ist die Abschirmung 30 von einem oder mehreren Kanälen 33 durchbrochen, die beispielsweise mit Festelektrolytmaterial gefüllt sind und die Zwischenschicht 34 mit der Festelektrolytschicht 11c ionenleitend verbinden. Um weiterhin zu verhindern, daß eine katalytische Reaktion der im Gasgemisch enthaltenen Gaskomponenten an der Abschirmung 30 stattfinden kann, sind diejenigen Bereiche der Abschirmung 30, die dem Gasgemisch ausgesetzt sind, zumindest teilweise mit keramischen Material bedeckt. Als keramisches Material kommt sowohl das für die Festelektrolytschicht 11a bis 11e verwendete Festelektrolytmaterial in Frage als auch Aluminiumoxid oder andere keramische Materialien. Die in Figur 2 dargestellte Abschirmung 30 kann zusätzlich eine Zuleitung aufweisen, so daß die gezielte Einstellung eines bestimmten Potentials der Abschirmung 30 ermöglicht wird.

In Figur 3 ist eine zweites Ausführungsbeispiel des erfindungsgemäßen Sensorelements dargestellt. Dabei sind die Begrenzungsflächen der als Hohlkörper ausgeführten Abschirmung 30 verlängert und elektrisch mit der inneren Pumpelektrode 24 kontaktiert. Auf diese Weise nimmt die Abschirmung 30 das Potential der inneren Elektrode 24 an. Die Abschirmung 30 ermöglicht somit eine effektive Abschirmung gegenüber dem von der ersten Pumpzelle bzw. von den zwischen den Elektroden 20, 22 der ersten Pumpzelle transportierten Sauerstoffionen ausgehenden elektrischen Feld. Da das Potential der Elektrode 24 dem der Elektrode 26 sehr ähnlich ist, ist eine deutliche Verbesserung der Meßgenauigkeit des Sensorelements gegeben.

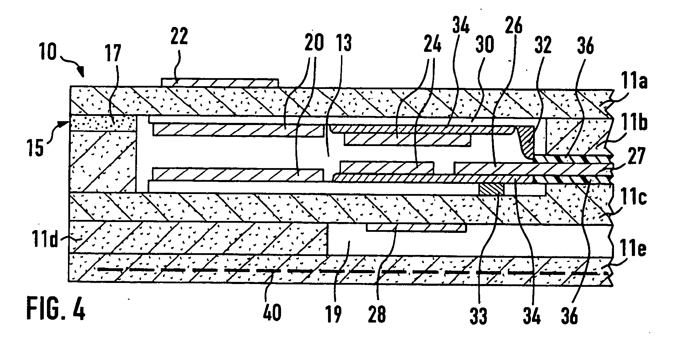

In Figur 4 ist ein drittes Ausführungsbeispiel des erfindungsgemäßen Sensorelements dargestellt. Dabei sind die Begrenzungsflächen der als Hohlkörper ausgeführten Abschirmung 30 so verlängert, daß diese elektrisch mit der inneren Elektrode 20 der ersten Pumpzelle kurzgeschlossen ist. Diese Anordnung bewirkt zum einen eine Abschirmung der Elektrode 26 gegenüber einem von den transportierten Sauerstoffionen ausgehenden elektrischen Feld sowie zusätzlich den Abtransport von Sauerstoff, der vom äußeren Gasraum durch die Festelektrolytschichten 11a, 11b, 11c in den inneren Gasraum 13 permeiert. Dabei sind die inneren Elektroden 24, 26 zur Vermeidung eines elektrischen Kurzschlusses von der Abschirmung 30 durch Zwischenschichten 34 getrennt. Die Zwischenschichten 34 sind zweckmäßigerweise aus Sauerstoffionen leitendem Festelektrolytmaterial. Die Abschirmung 30 weist hier eine weitere, nicht dargestellte Durchbrechung auf, durch die die innere Elektrode 24 kontaktiert wird.

Sensorelemente gemäß der vorliegenden Erfindung eignen sich zur Bestimmung u.a. von Stickoxiden, Sauerstoff, Kohlenwasserstoffen, Wasserstoff oder Schwefeloxiden. Die Erfindung darüber hinaus auch auf Sensorelemente von Gassensoren anwendbar, die auf einer potentiometrischen Bestimmung der entsprechenden Gaskomponenten beruhen. Da es dabei auf eine möglichst genaue Erfassung der Potentialdifferenz zwischen Meß- und Referenzelektrode ankommt, ist eine Abschirmung zumindest einer dieser Elektroden vorteilhaft.

## Patentansprüche

1. Sensorelement auf Festelektrolytbasis, insbesondere für einen Gassensor zur Bestimmung einer Gaskomponente in einem Gasgemisch, mit einer ersten und einer zweiten elektrochemischen Zelle, wobei im Bereich der Elektroden (26) der ersten elektrochemischen Zelle eine zumindest teilweise mit Festelektrolytmaterial (11 a, 11 b, 11 c, 32, 34) bedeckte, leitfähige Abschirmung (30) gegenüber einem von der zweiten elektrochemischen Zelle oder von den sich zwischen Elektroden (20, 22) der zweiten elektrochemischen Zelle bewegenden Ladungsträgern ausgehenden elektrischen Feld vorgesehen ist, **dadurch gekennzeichnet, daß** die Abschirmung (30) eine der Elektroden (20, 24, 26) der ersten und/oder der zweiten und/oder einer weiteren elektrochemischen Zelle in Form eines an mindestens einer Seite offenen Hohlkörpers umgibt.

2. Sensorelement nach Anspruch 1, **dadurch gekennzeichnet, daß** die Abschirmung (30) elektronenleitend ist.

3. Sensorelement nach Anspruch 1 oder 2, **dadurch gekennzeichnet, daß** an die Abschirmung (30) ein elektrisches Potential anlegbar ist.

4. Sensorelement nach einem der Ansprüche 1 bis 3, **dadurch gekennzeichnet, daß** die Abschirmung (30) das Potential einer der Elektroden (20, 24, 26) des Gassensors aufweist.

5. Sensorelement nach einem der vorhergehenden Ansprüche, **dadurch gekennzeichnet, daß** die Abschirmung (30) einen Meßgasraum (13) des Gassensors zumindest teilweise umgibt.

6. Sensorelement nach einem der vorhergehenden Ansprüche, **dadurch gekennzeichnet, daß** die Abschirmung (30) aus mindestens zwei verschiedenen Metallen ausgeführt ist.

7. Sensorelement nach einem der vorhergehenden Ansprüche, **dadurch gekennzeichnet, daß** die Abschirmung (30) ein Cermet enthält.

8. Sensorelement nach einem der vorhergehenden Ansprüche, **dadurch gekennzeichnet, daß** die Abschirmung (30) als Netz ausgeführt ist.

9. Verwendung eines Sensorelements nach mindestens einem der Ansprüche 1 bis 8 zur Bestimmung der Konzentration von Sauerstoff und/oder Stickoxiden in Abgasen von Verbrennungsmotoren.

## Claims

1. Sensor element based on a solid electrolyte, in particular for a gas sensor for determining a gas component in a gas mixture, with a first and a second electrochemical cell, a conductive shielding (30) being provided in the region of the electrodes (26) of the first electrochemical cell with respect to an electric field emanating from the second electrochemical cell or from the charge carriers moving between electrodes (20, 22) of the second electrochemical cell, which shielding is at least partly covered with solid electrolyte material (11 a, 11 b, 11 c, 32, 34), **characterized in that** the shielding (30) encloses one of the electrodes (20, 24, 26) of the first and/or the second and/or a further electrochemical cell in the form of a hollow body that is open on at least one side.

2. Sensor element according to Claim 1, **characterized in that** the shielding (30) is electron-conducting.

3. Sensor element according to Claim 1 or 2, **characterized in that** an electric potential can be applied to the shielding (30).

4. Sensor element according to one of Claims 1 to 3, **characterized in that** the shielding (30) has the potential of one of the electrodes (20, 24, 26) of the gas sensor.

5. Sensor element according to one of the preceding claims, **characterized in that** the shielding (30) at least partly surrounds a test gas space (13) of the gas sensor.

6. Sensor element according to one of the preceding claims, **characterized in that** the shielding (30) is made of at least two different metals.

7. Sensor element according to one of the preceding claims, **characterized in that** the shielding (30) comprises a cermet.

8. Sensor element according to one of the preceding claims, **characterized in that** the shielding (30) is made as a mesh.

9. Use of a sensor element according to at least one of Claims 1 to 8 for determining the concentration of oxygen and/or nitrogen oxides in exhaust gases of internal combustion engines.

## Revendications

1. Elément capteur à base d'un électrolyte solide, destiné en particulier à un capteur de gaz pour déterminer une composante de gaz dans un mélange de gaz, comprenant une première et une deuxième cellules électrochimiques, un blindage (30), au moins partiellement recouvert par un matériau électrolyte solide (11a, 11b, 11c, 32, 34), dans la zone des électrodes (26) de la première cellule électrochimique, étant conducteur par rapport au champ électrique généré par la deuxième cellule électrochimique ou par les supports de charge se déplaçant entre des électrodes (20, 22) de la deuxième cellule électrochimique,
**caractérisé en ce que**
le blindage (30) entoure l'une des électrodes (20, 24, 26) de la première et/ou de la deuxième et/ou d'une autre cellule électrochimique en forme de corps creux ouvert au moins d'un côté.

2. Elément capteur selon la revendication 1,
**caractérisé par**
le blindage (30) conducteur d'électrons.

3. Elément capteur selon la revendication 1 ou 2,
**caractérisé en ce que**
un potentiel électrique est appliqué au blindage (30).

4. Elément capteur selon l'une des revendications 1 à 3,
**caractérisé en ce que**
le blindage (30) présente le potentiel de l'une des électrodes (20, 24, 26) du capteur de gaz.

5. Elément capteur selon l'une des revendications précédentes,
**caractérisé en ce que**
le blindage (30) entoure au moins partiellement une chambre de mesure de gaz (13) du capteur de gaz.

6. Elément capteur selon l'une des revendications précédentes,
**caractérisé en ce que**
le blindage (30) est composé d'au moins deux métaux différents.

7. Elément capteur selon l'une des revendications précédentes,
**caractérisé en ce que**
le blindage (30) contient un cermet.

8. Elément capteur selon l'une des revendications précédentes,
**caractérisé en ce que**
le blindage (30) est en forme de réseau.

9. Utilisation d'un élément capteur selon au moins l'une des revendications 1 à 8 pour déterminer la concentration d'oxygène et/ou d'oxydes d'azote dans des gaz d'échappement de moteurs à combustion interne.
